# EUROPÄISCHE PATENTANMELDUNG

(11) **EP 4 775 867 A1**
(43) Veröffentlichungstag der Anmeldung: **15.07.2026**
(21) Anmeldenummer: 25151370.1
(22) Anmeldetag: 10.01.2025
(51) Int. Cl.: F16M 11/10, E05D 7/00, F16M 11/20, F16M 11/24

(54) **GELENKANORDNUNG FÜR EINEN FEDERARM**

(71) Anmelder: Ondal Medical Systems GmbH, 36088 Hünfeld (DE)
(72) Erfinder: Oginski, Stefan, 36043 Fulda (DE)
(74) Vertreter: Maiwald GmbH

(57) **Zusammenfassung**

Die vorliegende Erfindung betrifft Gelenke für Haltesysteme, insbesondere für Federarme, um eine Anpassung einer Position und/oder Neigung von Vorrichtungen zu ermöglichen. Insbesondere betrifft die Erfindung Gelenke, welche eine solche Anpassung mit verhältnismäßig geringem Kraftaufwand ermöglichen. Entsprechend wird ein Gelenk (10) für ein Haltesystem (100) vorgeschlagen, bevorzugt für einen Federarm (110), umfassend einen Grundkörper (12), welcher an einem ersten längsseitigen Endbereich (14) eine Verbindungsschnittstelle zur Befestigung des Gelenks (10) am Haltesystem (100) aufweist und an einem zweiten gegenüberliegendem längsseitigen Endbereich (16) einen Hohlraum aufweist, welcher sich lateral zur Längsrichtung erstreckt, eine laterale Drehachse (18), welche den Hohlraum durchstreckt, und einen Bügel (20) zum Aufnehmen einer Vorrichtung (130), welcher mittels mindestens einer im Hohlraum angeordneten Schenkelfeder (22) um die laterale Drehachse (18) gelagert ist. Dabei ist die laterale Drehachse (18) durch mindestens eine Hülse (24) und eine dadurch geführte Schraube (26) gebildet, wobei sich gegenüberliegende Endbereiche (52) des Bügels (20) durch die mindestens eine Hülse (24) und die Schraube (26) an einer den Hohlraum definierenden Innenfläche des Grundkörpers (12) fixierbar sind.

## Beschreibung

### Technisches Gebiet

Die vorliegende Erfindung betrifft Gelenke für Haltesysteme, insbesondere für Federarme, um eine Anpassung einer Position und/oder Neigung von Vorrichtungen zu ermöglichen. Insbesondere betrifft die Erfindung Gelenke, welche eine solche Anpassung mit verhältnismäßig geringem Kraftaufwand ermöglichen.

### Stand der Technik

In Krankenhäusern und ärztlichen Behandlungsräumen werden typischerweise Vorrichtungen, wie beispielsweise OP-Leuchten oder Diagnose- und/oder Überwachungsmonitore, höhenverstellbar aufgehängt, um diese an die Bedürfnisse des Anwenders anzupassen und entsprechend positionieren zu können. Um die Neigung und Positionierung solcher Vorrichtungen zu unterstützen, werden dazu in der Regel Gelenke verwendet, welche für sich genommen oder in Kombination mit einem Federarm und/oder einem Ausleger einen vorgegebenen, potenziellen Bewegungsradius der am Gelenk befestigten Vorrichtung definieren.

Solche Gelenke weisen dazu typischerweise mehrere Freiheitsgrade auf. So ermöglicht ein Kugelgelenk beispielsweise, dass der Bildschirm nach vorne und nach hinten sowie nach links und rechts verkippt werden kann, wobei das Bildschirm weiterhin auch nach links und rechts gedreht werden kann. Ebenfalls sind Bautypen aus mehreren zusammenhängenden Einzelgelenken bekannt, welche senkrecht zueinanderstehende Drehachsen aufweisen können.

Um das Drehmoment, welches aus dem Eigengewicht der Vorrichtung, beispielsweise eines Monitors, und dem Hebelarm zu einer Drehachse des Gelenks resultiert, auszugleichen, kann ein entsprechender Freiheitsgrad bei manchen Ausgestaltungen des Gelenks fixiert werden. So kann im Falle eines Kugelgelenks die Kugel in der Schale geklemmt werden.

Problematisch ist nun jedoch, dass sich die einzelnen Freiheitsgrade nur gleichzeitig bremsen beziehungsweise fixieren lassen, wodurch sich die Bedienung und Ausrichtung der Vorrichtung erschwert. Darüber hinaus ist bei einer solchen Ausgestaltung keine Kraftunterstützung vorhanden, sodass beispielsweise für das Kippen der Vorrichtung nach hinten ein erhöhter Kraftaufwand erforderlich wird.

Konstruktionen, welche eine Kraftunterstützung vorsehen, beispielsweise mittels einer Feder, weisen keine Möglichkeit auf, eine erforderliche Bewegungskraft einzustellen, sodass die Bewegungskraft nicht an das Gewicht oder die Größe der Vorrichtung angepasst werden kann. Weiterhin sind die Freiheitsgrade in solchen Konstruktionen typischerweise begrenzt und/oder werden nur durch voneinander separate Einzelgelenke bereitgestellt. Dadurch weist die Gelenkgruppe eine hohe Komplexität und eine Vielzahl von Bauteilen auf, wodurch die Montage erschwert und die Herstellung verhältnismäßig kostspielig ist.

### Darstellung der Erfindung

Ausgehend von dem bekannten Stand der Technik ist es daher eine Aufgabe der vorliegenden Erfindung, ein neues und verbessertes Gelenk bereitzustellen. Bevorzugt liegt eine Aufgabe darin, ein Gelenk bereitzustellen, welches den Kraftaufwand, welcher zum Drehen oder Kippen einer am Gelenk befestigten Vorrichtung erforderlich ist, reduziert und wobei der Kraftaufwand in entgegengesetzten Richtungen bevorzugt gleich ist. Besonders bevorzugt ist der Kraftaufwand dabei einstellbar und die Freiheitsgrade sind unabhängig voneinander anpassbar.

Die Aufgabe wird durch den Gegenstand des unabhängigen Anspruchs 1 gelöst. Vorteilhafte Weiterbildungen ergeben sich aus den Unteransprüchen, der Beschreibung und den Figuren.

Entsprechend wird ein Gelenk für ein Haltesystem, bevorzugt für einen Federarm, vorgeschlagen, umfassend einen Grundkörper, welcher an einem ersten längsseitigen Endbereich eine Verbindungsschnittstelle zur Befestigung des Gelenks am Haltesystem aufweist und an einem zweiten gegenüberliegendem längsseitigen Endbereich einen Hohlraum aufweist, welcher sich lateral zur Längsrichtung erstreckt, eine laterale Drehachse, welche den Hohlraum durchstreckt, und einen Bügel zum Aufnehmen einer Vorrichtung, welcher mittels mindestens einer im Hohlraum angeordneten Schenkelfeder um die laterale Drehachse gelagert ist. Dabei ist die laterale Drehachse durch mindestens eine Hülse und eine dadurch geführte Schraube gebildet, wobei sich gegenüberliegende Endbereiche des Bügels durch die mindestens eine Hülse und die Schraube an einer den Hohlraum definierenden Innenfläche des Grundkörpers fixierbar sind.

Die vorteilhafte Ausgestaltung des Gelenks ermöglicht einerseits, dass die erforderliche Kraft für das Aufnehmen eines Drehmoments, welches von einer am Gelenk befestigten Vorrichtung bereitgestellt wird, im Wesentlichen durch die mindestens eine Schenkelfeder bereitgestellt wird. Mit anderen Worten wird durch die Kopplung der Schenkelfeder am Grundkörper eine Drehung um die laterale Drehachse beschränkt beziehungsweise dieser entgegengewirkt, sodass die Vorrichtung am Grundkörper gelagert ist und das Gewicht der Vorrichtung über die Schenkelfeder gehalten wird. Denn durch die Schenkelfeder wird ein Drehmoment bereitgestellt, welches das Eigengewicht der Vorrichtung weitestgehend ausgleicht. Auf diese Weise kann eine Neigung der Vorrichtung sehr leicht angepasst werden, zumal hierfür lediglich ein resultierendes Drehmoment aufgebracht werden muss. Entsprechend ermöglicht das erfindungsgemäße Gelenk eine leichte Handhabung und Verdrehung um die senkrechte Drehachse, um eine Vorrichtung nach vorne oder nach hinten zu kippen.

Darüber hinaus ist die für eine Neigungsanpassung der Vorrichtung erforderliche Kraft in beiden Drehrichtungen im Wesentlichen gleich. Dadurch kann eine Feinjustierung der Position der Vorrichtung besonders einfach vorgenommen werden. Weiterhin kann dadurch verhindert werden, dass die Vorrichtung beispielsweise aufgrund des Eigengewichts zu sehr nach hinten oder nach vorne gedreht wird.

Gleichermaßen können durch die fixierbare Anordnung des Bügels an dem Grundkörper Reibungskräfte bereitgestellt werden, welche die Drehung um die laterale Drehachse weiter beschränken. Dies hat den Vorteil, dass dadurch nur eine geringe Differenz zwischen dem Drehmoment, das aus dem Eigengewicht der Vorrichtung resultiert, und dem Drehmoment der Schenkelfeder durch die Fixierung ausgeglichen werden muss, um eine Position der Vorrichtung beizubehalten. Dadurch lassen sich geringe Bewegungskräfte realisieren, die auch bei schwereren Vorrichtungen immer noch eine komfortable Verstellung und Bedienbarkeit ermöglichen.

Zudem ist die Halterung des Bügels relativ zum Grundkörper einstellbar, so dass ein Bewegungswiderstand an die Bedürfnisse des Benutzers angepasst werden kann. So kann eine Reibungskraft eingestellt werden, welche eine weitere Anpassung der Position der Vorrichtung bei einer vorgegebenen Betätigungskraft ermöglicht, wobei in Abwesenheit einer Betätigung aufgrund der ausbalancierten Drehmomente am Gelenk gleichwohl keine Drehung erfolgt. Die Vorrichtung kann somit ihre Lage oder Neigung in jeder eingestellten Position beibehalten und sich nicht selbstständig bewegen. Gleichermaßen kann die Reibungskraft derart eingestellt werden, dass keine Anpassung der Position unter Einwirkung von üblichen Betätigungskräften ermöglicht wird.

Erfindungsgemäß wird entsprechend eine besonders vorteilhafte Kombination der Kraftunterstützung, einerseits, und des einstellbaren Bewegungswiderstands, andererseits, ermöglicht, wodurch die Handhabung für einen Benutzer besonders vorteilhaft ist. Es bleiben vorteilhafterweise sowohl die Kraftunterstützung als auch das Einstellen der Halterung des Bügels am Grundkörper unabhängig von einer Anpassung von eventuellen anderen Freiheitsgraden beziehungsweise Drehrichtungen am Gelenk.

Das Gelenk ist bevorzugt dazu ausgebildet, an einem vorderen Gelenk eines Federarms eines Haltesystems, welches eine Höhenverstellung der Vorrichtung ermöglicht, befestigt zu werden. Bevorzugt ist der Federarm mit einem Ausleger verbunden. Auf diese Weise kann die Vorrichtung sowohl in Höhenrichtung als auch in einer Schwenkrichtung positioniert werden, wobei das Gelenk gemäß der Erfindung zusätzlich mindestens ein Verkippen oder Verdrehen nach vorne und hinten über die laterale Drehachse, welche im Gravitationsfeld eine horizontale Drehachse darstellt, ermöglichen.

Die Komponenten des Gelenks können bevorzugt zumindest teilweise als Gussteile bereitgestellt sein. So können beispielsweise die tragenden Bauteile des Gelenks wie der Grundkörper als Gussteil, insbesondere mittels eines Aluminium- oder Zinkdruckgussverfahrens hergestellt sein. Hierdurch kann nicht nur eine kostengünstige Herstellung bei einer hohen Stückzahl ermöglicht werden. Auch wird hierdurch die strukturelle Stabilität verbessert und eine einfachere Montage ermöglicht. Gleichermaßen kann der Bügel bevorzugt als Blechteil ausgebildet sein. Auf diese Weise lassen sich die Gesamtkosten für die Herstellung des Gelenks erheblich reduzieren.

Darüber hinaus wird durch den vorgesehenen Hohlraum und die Anordnung sowohl der lateralen Drehachse als auch der mindestens einen Schenkelfeder im Hohlraum ein besonders kompakter Aufbau ermöglicht. Durch den vorteilhaften Aufbau wird weiterhin ermöglicht, dass die mindestens eine Schenkelfeder für eine vorgegebene Traglast eingerichtet ist, wobei die mindestens eine Schenkelfeder entsprechend ausgetauscht werden kann. Mit anderen Worten lassen sich mit unterschiedlichen Schenkelfedern basierend auf dem erfinderischen Gedanken eine Vielzahl unterschiedlicher Traglasten realisieren, so dass die Mehrzahl der Bauteile auch bei verschiedenen Varianten wiederverwendet werden kann und entsprechend ein modularer Aufbau ermöglicht wird.

Bevorzugt ist der Hohlraum durch zwei sich lateral erstreckende Aussparungen gebildet, welche sich gegenüberliegen und parallel zueinander angeordnet sind. Die Aussparungen sind mittels einer Durchgangsöffnung, durch die die Schraube geführt ist, miteinander verbunden. In jeder Aussparung ist bevorzugt eine Schenkelfeder angeordnet. Die Aussparungen, welche im Wesentlichen zylinderförmig ausgebildet sein können, weisen bevorzugt eine laterale Öffnung auf, wodurch sich die Schenkelfedern einfach in die jeweilige Aussparung einsetzen lassen. Auf diese Weise kann die Montage des Gelenks erheblich vereinfacht werden, wobei durch die Schenkelfedern eine verbesserte Haltekraft für eine Traglast einer Vorrichtung bereitgestellt werden kann.

Um eine verbesserte drehbare Lagerung des Bügels und gleichermaßen eine verbesserte Fixierung des Bügels am Grundkörper zu ermöglichen, ist die Durchgangsöffnung bevorzugt in einer mittig angeordneten Innenwand des Grundkörpers vorgesehen, wobei für jede Aussparung mindestens eine Hülse vorgesehen ist und wobei der Bügel vorteilhafterweise über die Hülsen mit der Innenwand im Eingriff stehen.

Beispielsweise kann in jeder Aussparung eine einzelne Hülse vorgesehen sein, wobei die Wand der Hülse einen Spalt zur Schraube definiert. Eine solche Ausgestaltung kann beispielsweise vorgesehen sein, wenn ein in der jeweiligen Aussparung aufgenommener Federhalter mit dem Bügel verschraubt ist und der Bügel, bevorzugt ausschließlich, über den jeweiligen Federhalter und einen in der jeweiligen Aussparung aufgenommenen Lagerring am Grundkörper gelagert ist.

Alternativ kann die mindestens eine Hülse aber auch derart ausgestaltet sein, dass die Wand der Hülse und die Schraube vergleichsweise im Wesentlichen frei von einem Spiel sind. Eine solche Ausgestaltung ist besonders vorteilhaft, wenn der Bügel auf den jeweiligen Federhalter gesteckt und damit nicht fest verbunden ist und der Bügel entsprechend über die mindestens eine Hülse gelagert werden kann. In einer solchen Ausgestaltung kann die mindestens eine Hülse bevorzugt eine äußere Hülse aus einem Metall oder Metalllegierung und eine darin angeordnete innere Hülse aufweisen, welche sowohl die Wand der äußeren Hülse als auch die äußere Oberfläche der Schraube kontaktiert. Die innere Hülse kann dabei besonders bevorzugt aus einem Kunststoff gebildet sein.

Durch den Kontakt und optional durch die bevorzugte Materialauswahl der äußeren Hülse und der inneren Hülse kann der Reibwiderstand erhöht werden, zumal die Reibkraft auf diese Weise nur durch die äußere Hülse übertragen wird und der Abstand der Reibfläche zur Drehachse und der entsprechende Reibradius somit vergrößert werden können. Alternativ kann die Dimensionierung der Hülse beziehungsweise deren Wandstärke ebenfalls angepasst sein.

Optional kann der Reibwiderstand aufgrund der Ausgestaltung der Hülsen vorgegeben sein. Auf diese Weise kann aufgrund der Lagerung des Bügels an der mindestens einen Hülse ebenfalls der entsprechende Schenkelfeder entfallen. Dadurch kann eine Anpassung der Neigung einer angebrachten Vorrichtung gegebenenfalls eine höhere Betätigungskraft erfordern. Es wird hierdurch jedoch eine besonders kostengünstige Ausgestaltung bei einer geringeren Komplexität der Herstellung ermöglicht. Gleichermaßen können auch der jeweilige Federhalter und der jeweilige Lagerring in einer solchen Ausgestaltung optional entfallen. Bevorzugt sind diese jedoch in der jeweiligen Aussparung aufgenommen, um eine Drehbegrenzung des Bügels zu unterstützen.

Bevorzugt erstreckt sich der Bügel zumindest teilweise seitlich entlang der Aussparungen beziehungsweise Öffnungen. So kann der Bügel besonders bevorzugt zwei Schenkel aufweisen, welche parallel zueinander ausgerichtet und mit der lateralen Drehachse verbunden sind, sodass der Bügel bevorzugt U-förmig ausgebildet ist. Die Hülsen bewirken, dass der Bügel beziehungsweise die Bügelschenkel sich beim Anziehen der Schraube zur Innenwand bewegen und der Bügel relativ zum Grundkörper zusammengedrückt wird.

Entsprechend kann durch die mittig angeordnete Innenwand und die Verwendung von jeweiligen Hülsen eine verbesserte Fixierung des Bügels am Grundkörper bereitgestellt sein.

Die Aussparungen können im Hinblick auf die mittig angeordnete Innenwand spiegelsymmetrisch zueinander sein. Auf diese Weise kann aufgrund der geringeren Komplexität eine vereinfachte oder kostengünstigere Herstellung des Grundkörpers ermöglicht werden. Darüber hinaus können Bauteile, welche innerhalb der Aussparungen angeordnet sind, gleich ausgebildet sein, wodurch sich das Herstellungsverfahren vereinfachen und die Anzahl voneinander verschiedenen Bauteilen reduzieren lässt.

Der Grundkörper wird bevorzugt von Verkleidungsteilen, welche bevorzugt ineinandergesteckt sind und ineinander einrasten, umgeben. Die Verkleidungsteile können den Hohlraum oder die Aussparungen seitlich begrenzen und derart ausgebildet sein, dass sie den Bügel lateral umgeben.

Für jede Schenkelfeder ist bevorzugt ein jeweiliger Federhalter zumindest teilweise im Hohlraum angeordnet, welcher mit dem Bügel verbunden ist, wobei die Schenkelfeder und der Federhalter sich lateral erstrecken und wobei jede Schenkelfeder am jeweiligen Federhalter befestigt ist. Über den Federhalter oder mittels des Federhalters kann der Bügel besonders vorteilhaft am Grundkörper gelagert sein, insbesondere wenn der Federhalter fest mit dem Bügel verbunden, beispielsweise verschraubt ist. Denn aufgrund dieser Ausgestaltung kann die Lagerung des Bügels verbessert werden und es wird eine Lagerung ermöglicht, welche im Wesentlichen unabhängig von der Fixierung des Bügels um die Drehachse ist. So kann der Bügel, insbesondere wenn dieser mit dem Federhalter (fest) verbunden ist, auch ohne eine Fixierung durch die Schraube relativ zum Grundkörper gehalten und es kann die Traglast einer Vorrichtung, welche auf den Bügel übertragen wird, über den Federhalter auf die jeweilige Schenkelfeder übertragen werden. Der jeweilige Federhalter ist dabei bevorzugt konzentrisch mit der lateralen Drehachse und der jeweiligen Schenkelfeder angeordnet.

Entsprechend kann der Bügel durch den Federhalter und die Schenkelfeder um die laterale Drehachse gelagert sein; der Bügel ist zusätzlich über die Schraube mit der lateralen Drehachse verbunden. Der jeweilige Federhalter ist zwar um die laterale Drehachse herum gelagert, wird jedoch beim Anziehen der Schraube nicht fixiert, sodass die von der mindestens einen Schenkelfeder bereitgestellte Halterung für die Vorrichtung auch mit (sehr) geringen zusätzlichen Reibkräfte, welche durch die Fixierung des Bügels mittels der Schraube erzeugt werden können, gegeben ist und die Position des Bügels um die laterale Drehachse herum mit der entsprechenden Kraftunterstützung angepasst werden kann.

Gemäß einer alternativen bevorzugten Variante kann, wie vorstehend beschrieben, auch vorgesehen sein, dass der Bügel über die Schraube und die Hülsen gelagert ist, beispielsweise wenn der jeweilige Federhalter nicht mit dem Bügel verschraubt ist. In einer solchen Ausführungsform kann die Traglast dennoch durch die Schenkelfedern aufgenommen werden, über die Hülsen und die Schraube ist dabei dennoch eine sichere Lagerung des Bügels bereitgestellt.

Bevorzugt sind zwei Schenkelfedern vorgesehen, wobei eine Schenkelfeder mit einem jeweiligen Federhalter in einer jeweiligen, den Hohlraum definierenden Aussparung angeordnet ist.

Der jeweilige Federhalter kann mittels Schrauben über Aufnahmen im Bügel mit dem Bügel verbunden sein, bevorzugt mittels zwei Schrauben. Alternativ kann jedoch vorgesehen sein, dass der jeweilige Federhalter über eine Steckverbindung mit dem Bügel verbunden wird. So kann jeder Federhalter beispielsweise zwei Zapfen aufweisen, welche in entsprechende Aufnahmen am Bügel aufgenommen sein können. Die Zapfen sind dabei bevorzugt mit einer Spielpassung in den Aufnahmen aufgenommen. Dies hat den Vorteil, dass großzügigere Fertigungstoleranzen vorgesehen sein können und die Montage beispielsweise manuell durch einfaches Einstecken oder Aufstecken ermöglicht wird. Alternativ können die Zapfen auch reibschlüssig beziehungsweise mittels einer Presspassung mit den Aufnahmen verbunden sein.

Die Verbindung des Federhalters zum Bügel ist bevorzugt an einem lateralen Endbereich des Federhalters vorgesehen, welcher um den Hohlraum beziehungsweise um den Grundkörper herum angeordnet ist und den Hohlraum entsprechend umgibt. Auf diese Weise kann die Federkraftunterstützung durch die Schenkelfeder, welche im Hohlraum angeordnet ist, effizient auf den außerhalb des Hohlraums angeordneten Bügel übertragen werden; es wird die Drehung des Bügels relativ zum Grundkörper, insbesondere um den Grundkörper, erleichtert.

Die Befestigung der mindestens einen Schenkelfeder mit dem Grundkörper und dem Federhalter erfolgt dabei bevorzugt formschlüssig. So ist bevorzugt ein Schenkel einer jeden Schenkelfeder in einer Nut des jeweiligen Federhalters aufgenommen, wobei der jeweils andere Schenkel der jeweiligen Schenkelfeder in einer Nut des Grundkörpers aufgenommen ist. Die Nuten sind bevorzugt lateral voneinander beabstandet, um eine maximale Erstreckung und Dimensionierung der Schenkelfeder zu ermöglichen. So ist die Nut im Federhalter bevorzugt außerhalb vom beziehungsweise angrenzend zum Hohlraum oder zur Aussparung angeordnet. Die Nut im Grundkörper ist bevorzugt angrenzend zum gegenüberliegenden Endbereich im Hohlraum angeordnet, bevorzugt angrenzend zur mittig angeordneten Innenwand des Grundkörpers.

Um die Lagerung des jeweiligen Federhalters am Grundkörper zu unterstützen und zu verhindern, dass sich die mindestens eine Schenkelfeder beispielsweise versehentlich verkeilen kann oder ein bewegbar im Hohlraum angeordnetes Bauteil versehentlich zwischen die Windungen der mindestens einen Schenkelfeder gerät, ist für jede Schenkelfeder bevorzugt ein Lagerring im Hohlraum vorgesehen. Der Lagerring ist bevorzugt um die jeweilige Schenkelfeder herum angeordnet und verdrehsicher an der Innenfläche des Grundkörpers gehalten, wobei jeder Lagerring von einem jeweiligen Federhalter umgeben ist. Auf diese Weise kann der Bügel mittels des mindestens einen Federhalters um den mindestens einen Lagerring herumgedreht werden. Die Lagerung des Bügels erfolgt somit am Grundkörper und kann im Wesentlichen unabhängig von der Fixierung der Schraube beziehungsweise der Hülse(n) erfolgen.

Der Lagerring beziehungsweise die Lagerringe können besonders vorteilhaft als Kunststoffteile, beispielsweise als Kunststoffspritzgussteile, hergestellt sein, wodurch sehr geringe Einzelteilkosten sichergestellt werden können. Auf diese Weise können ebenfalls unterschiedliche Lagerringe hergestellt sein, welche beispielsweise an eine Dimensionierung der Schenkelfeder und des entsprechenden Federhalters angepasst sind.

Durch unterschiedliche Ausgestaltungen des Lagerrings kann zudem eine Vielzahl von unterschiedlichen Bewegungsbereichen realisiert werden. So kann jeder Lagerring mindestens einen sich radial nach außen erstreckenden Vorsprung aufweisen, welcher mit einem Vorsprung am jeweiligen Federhalter in Eingriff bringbar ist und einen Drehwinkel des Bügels um die laterale Drehachse begrenzt. Der mindestens eine Vorsprung des Lagerrings kann beispielsweise zapfenförmig ausgebildet sein und eine Anstoßfläche oder Raste für den jeweiligen Federhalter bereitstellen, wodurch der Federhalter nicht weiter relativ zum Grundkörper gedreht werden kann.

Für eine einfachere Ausrichtung des jeweiligen Lagerrings im Hohlraum beziehungsweise in einer jeweiligen Aussparung weist jeder Lagerring bevorzugt Aussparungen oder Ausschnitte an vorgegebenen Positionen auf, welche bei einer vorgesehenen Ausrichtung von Domen am Grundkörper im Hohlraum oder in der jeweiligen Aussparung aufgenommen werden oder damit im Eingriff stehen. Auf diese Weise kann einfach sichergestellt werden, dass der Lagerring und der mindestens eine Vorsprung für eine vorgegebene Drehbegrenzung ausgerichtet sind.

Für verschiedene Anwendungen oder Vorrichtungen kann es auch vorteilhaft sein, den Drehbereich in den entgegengesetzten Drehrichtungen unterschiedlich zu begrenzen. Dies kann beispielsweise für Monitore hilfreich sein, für welche eine Befestigung am Gelenk von einer Unterseite des Monitors erforderlich werden kann, sodass beispielsweise eine Drehung nach hinten nicht beschränkt wird. Entsprechend kann vorgesehen sein, dass der Drehwinkel in entgegengesetzten Richtungen durch zwei in Umfangsrichtung voneinander beabstandete Vorsprünge oder durch einen sich entlang der Umfangsrichtung erstreckenden Vorsprung unterschiedlich begrenzt ist.

Bei einer Ausrichtung des Bügels senkrecht zur Längsrichtung des Grundkörpers beträgt der Drehwinkel 0°. Eine Drehung in Richtung des ersten Endbereichs kann ohne Drehbegrenzung etwa -90° und in Richtung des zweiten Endbereichs etwa 90° (aufgrund der Geometrien kann der Drehwinkel auf etwa 85° beschränkt sein) umfassen, sodass der Gesamtdrehwinkel etwa 180° beträgt.

Alternativ kann der Lagerring so ausgestaltet sein, dass er beispielsweise im unteren Bereich keinen Vorsprung, dafür aber einen Vorsprung im oberen Bereich aufweist. Auf diese Weise kann ein Drehbereich von -60° nach hinten bis etwa -90° nach hinten realisiert sein. Der Bügel kann somit bis in die Waagerechte nach hinten gekippt werden und von dieser Position aus wieder etwa 30° nach vorne. Eine solche Drehbegrenzung ist besonders vorteilhaft, um Patientenmonitore, die in der Regel von unten befestigt werden, sinnvoll ausrichten zu können.

Bevorzugte alternative Drehbegrenzungen umfassen beispielsweise eine Drehbegrenzung von -60° nach hinten bis 85° nach vorne, von -60° nach hinten bis 45° nach vorne oder von -30° nach hinten bis 30° nach vorne. Durch unterschiedliche Ausgestaltung des jeweiligen Lagerrings und des entsprechenden mindestens einen Vorsprungs können derart verschiedene Drehbereiche realisiert werden, sodass sich der gewünschte Drehbereich schnell und einfach im Rahmen der Montage durch das Einbauen des passenden Lagerrings vorgeben lässt.

Um die Befestigung der Vorrichtung am Bügel zu erleichtern, weist das Gelenk bevorzugt eine Anschlussplatte auf. Die Anschlussplatte kann an die Geometrie und Verbindungsschnittstelle der Vorrichtung angepasst sein. Ebenfalls kann die Erstreckung der Anschlussplatte in einer Richtung senkrecht zur Längsrichtung des Grundkörpers derart angepasst sein, dass die Vorrichtung im montierten Zustand entweder auf Höhe der lateralen Drehachse oder oberhalb der lateralen Drehachse angeordnet ist. Die Anschlussplatte ist vorteilhaft an einer äußeren Oberfläche des Bügels befestigt.

Bevorzugt weisen die Anschlussplatte und der Bügel zur Befestigung jeweils mindestens zwei Aufnahmen auf, welche überlappend zueinander angeordnet sind und in welche jeweils eine Schraube aufgenommen ist, wobei die Schrauben an einer inneren Oberfläche des Bügels in einer jeweiligen Druckhülse aufgenommen sind und der Bügel ausschließlich durch an den Druckhülsen befestigte Federn zur Anschlussplatte vorgespannt ist.

Auf diese Weise wird durch die Schrauben und die Druckhülsen eine Halterung für die Anschlussplatte bereitgestellt, wobei jedoch aufgrund der Druckhülsen eine geringe Klemmkraft bereitgestellt wird. Denn die Klemmkraft wird bevorzugt ausschließlich durch die mit den Hülsen verbundenen Federn bereitgestellt. Die Federn sind bevorzugt als Tellerfedern ausgebildet, welche beispielsweise an einem dem Bügel gegenüberliegenden Endbereich der Druckhülse in einer entsprechenden Aufnahme der Druckhülse aufgenommen sind. Durch die geringe Klemmkraft, aber die gleichzeitig sichere Halterung der Anschlussplatte wird vorteilhafterweise ein Spiel bereitgestellt, wodurch sich die Anschlussplatte geringfügig relativ zum Bügel bewegen lässt. Auf diese Weise wird ermöglicht, dass das Gelenk neben der lateralen (horizontalen) Drehachse eine zweite Drehachse aufweist, welche ein seitliches Kippen ermöglicht. Anstatt einer Drehung um die laterale Drehachse, welche eine Drehung nach hinten und vorne ermöglicht, wird durch diese zweite Drehachse eine Neigung der Vorrichtung nach links und rechts ermöglicht, welche relativ zum Bügel erfolgt.

Entsprechend lassen sich mit der bevorzugten Ausgestaltung des Gelenks weitere Freiheitsgrade bereitstellen, ohne dass die Komplexität des Gelenks hierdurch erhöht würde. Das Spiel, das durch die Befestigung ermöglicht wird, ermöglicht bevorzugt einen seitlichen Drehwinkel im Bereich von -5° bis 5°, wobei eine Ausrichtung senkrecht zur lateralen Drehachse einen Drehwinkel von 0° definiert.

Ein weiterer Vorteil dieser bevorzugten Ausgestaltung des Gelenks liegt darin, dass die seitliche Neigungsanpassung unabhängig von der durch die mindestens eine Schenkelfeder bereitgestellten Haltekraft und unabhängig von den durch die Schraubverbindung bereitgestellten Reibungskräften erfolgen kann. Entsprechend ist durch die Aufteilung der Freiheitsgrade auf verschiedene Drehachsen das gezielte Bremsen oder Unterstützen von Bewegungen in bestimmten Richtungen möglich, wobei gleichzeitig eine Haltekraft zumindest entlang der lateralen Drehachse einstellbar ist.

Bevorzugt sind die Aufnahmen des Bügels dabei als Langlöcher ausgebildet, welche sich zumindest teilweise lateral erstrecken. Auf diese Weise kann das seitliche Verstellen der Vorrichtung aufgrund der Geometrie der Aufnahmen unterstützt werden, wobei der Drehbereich gleichermaßen von der entsprechenden Geometrie vorgegeben sein kann. Die Ausgestaltung der Aufnahmen als Langlöcher ermöglicht darüber hinaus, dass das Spiel, welches durch die Druckhülsen und die damit verbundenen Federn bereitgestellt wird, optional reduziert werden kann, um die Befestigung weiter zu unterstützen. Alternativ können die Langlöcher aber auch entfallen; es können die Aufnahmen als kreisrunde Bohrungen oder bevorzugt als Gewindebohrungen ausgebildet sein, wodurch nur eine geringfügige oder keine seitliche Neigungsanpassung ausgeführt werden kann. Die Ausgestaltung als Gewindebohrungen hat jedoch den Vorteil, dass auf Tellerfedern, Druckhülsen und Scheiben verzichtet und eine Anschlussplatte direkt mit dem Bügel verschraubt werden kann. Hierdurch kann die Montage erheblich vereinfacht werden.

Bevorzugt wird durch das Gelenk neben der Drehung um die laterale Drehachse auch eine Schwenkbewegung relativ zum Haltesystem ermöglicht. Entsprechend definiert die Verbindungsschnittstelle am ersten Endbereich des Grundkörpers bevorzugt eine senkrechte Drehachse, welche sich senkrecht zur Längsrichtung und zur lateralen Erstreckungsrichtung des Grundkörpers erstreckt, wobei der Grundkörper dazu eingerichtet ist, im montierten Zustand um die senkrechte Drehachse am Haltesystem gelagert zu sein.

Auf diese Weise können weitere Freiheitsgrade für die Anordnung der Vorrichtung bereitgestellt werden. Es kann die Vorrichtung entsprechend nicht nur über die laterale (horizontale) Drehachse nach hinten und vorne, sondern auch um die senkrechte (vertikale) Drehachse gedreht werden. Dadurch dass die laterale Drehachse und die Haltekraft für den Bügel am zweiten Endbereich vorgesehen sind, ist die Drehung um die senkrechte Drehachse unabhängig von der Drehung um die laterale Drehachse. Darüber hinaus ist auch die Fixierung des Bügels mittels der Schraube und die damit einhergehende Reibungskraft oder Bremskraft für die Bewegung um die laterale Drehachse unabhängig von einer Bewegung, also eine bevorzugte Fixierung um die senkrechte Drehachse.

Entsprechend wird durch die bevorzugte Ausgestaltung des Gelenks ermöglicht, dass eine Vorrichtung sowohl nach vorne und hinten gedreht als auch um die senkrechte Drehachse geschwenkt werden kann. Besonders bevorzugt wird darüber hinaus eine seitliche Neigungsanpassung durch die bevorzugte Verbindung zwischen dem Bügel und einer Anschlussplatte ermöglicht.

Bevorzugt ist die senkrechte Drehachse von einer in einer Aufnahme des Grundkörpers vorgesehenen Durchgangsöffnung mit einer darin aufgenommenen Druckhülse für eine Schraube gebildet, wobei an den Stirnseiten der Hülse eine jeweilige Drehscheibe um die Druckhülse angeordnet ist, und wobei an mindestens einem längsseitigen Endbereich der Druckhülse eine Scheibe in der Aufnahme angeordnet ist, welche verdrehsicher zum Grundkörper gehalten ist und durch eine in der Aufnahme angeordnete Feder an eine angrenzende Drehscheibe gedrückt wird. Die Durchgangsöffnung erstreckt sich bevorzugt senkrecht zur lateralen Erstreckungsrichtung des Grundkörpers.

Durch die Schraube und die an der Druckhülse anliegenden Drehscheiben kann der Grundkörper an einer entsprechenden Aufnahme des Haltesystems befestigt werden, wobei die Schraube bevorzugt mittels einer Mutter, welche in einer Aussparung am Haltesystem eingelegt ist, angezogen werden kann. Die Mutter wird bevorzugt formschlüssig in der Aussparung gehalten. Durch das Anziehen der Schraube wird der Grundkörper über die Aufnahme im Grundkörper entsprechend zur Aufnahme des Haltesystems gedrückt. Die Drehscheiben unterstützen die drehbare Lagerung des Grundkörpers relativ zum Haltesystem, wobei die Lagerung durch die mindestens eine verdrehsichere Scheibe weiter verbessert werden kann. Hierdurch wird eine Relativbewegung zwischen der Drehscheibe und der angrenzenden verdrehsicheren Scheibe mit gleitenden Kontaktflächen bereitgestellt.

Um zu verhindern, dass eine unbeabsichtigte oder zu leichte Schwenkbewegung des Gelenks am Haltesystem erfolgt, wird die verdrehsichere Scheibe durch die mindestens eine Feder an die angrenzende Drehscheibe angedrückt. Entsprechend wird durch die Feder eine axiale oder senkrechte Kraft auf die Drehscheibe ausgeübt, sodass Reibung zwischen der Drehscheibe und der verdrehsicheren Scheibe entsteht, wodurch die für das Verdrehen um die senkrechte Drehachse erforderliche Kraft eingestellt werden kann.

Bevorzugt ist eine verdrehsichere Scheibe an jeder Drehscheibe vorgesehen, sodass an beiden Endbereichen der Druckhülse eine Lagerung durch die jeweilige Drehscheibe mit einer verdrehsicheren Scheibe bereitgestellt ist. Die verdrehsichere Scheibe ist bevorzugt aufgrund ihrer Geometrie in der Aufnahme gehalten. So ist die verdrehsichere Scheibe besonders bevorzugt als Vierkantscheibe ausgebildet, welche in einer entsprechend ausgebildeten Tasche in der Aufnahme formschlüssig gehalten wird.

Um einen eventuellen Verschleiß der Drehscheiben und der mindestens einen verdrehsicheren Scheibe zu reduzieren, können diese Bauteile aus Stahl oder sogar aus gehärtetem Stahl gefertigt sein. Der Grundkörper kann aus einem leichteren Material und weniger abriebfestem Material ausgebildet sein, beispielsweise aus einer Aluminiumlegierung.

Die Feder ist bevorzugt als Tellerfeder ausgebildet. Entsprechend kann die Reibungskraft beispielsweise nicht nur durch die Anziehkraft der Schraube, sondern optional auch durch den Austausch der Tellerfeder und/oder durch den Austausch der Druckhülse angepasst werden.

Alternativ oder zusätzlich kann auch vorgesehen sein, dass eine separate Drehbegrenzung für die senkrechte Drehachse bereitgestellt ist. Bevorzugt weist der Grundkörper dazu radial zur Druckhülse eine Aussparung auf, in welcher ein Gewindestift mit einer darauf in radialer Richtung verschiebbar angeordneten Bremsbacke angeordnet ist, wobei die Bremsbacke durch mindestens eine Feder, welche zwischen der Bremsbacke und einer Aufnahme am Gewindestift angeordnet ist, mit dem Umfang der Druckhülse im Eingriff steht.

Entsprechend kann eine seitliche Fixierung oder Begrenzung der senkrechten Drehachse bereitgestellt sein, welche durch die Reibungskräfte, welche durch das Drehen des Gewindestifts und die entsprechende Vorspannung auf die Bremsbacke an der Druckhülse entstehen, einstellbar ist.

So kann eine gewünschte Reibung somit bereits aufgrund der Druckhülse und die sich in senkrechter Richtung erstreckende Feder beziehungsweise Tellerfeder bereitgestellt sein, Wobei die Reibung im Wesentlichen auf der Vorspannung der Feder auf die verdrehsichere Scheibe basiert.

Zusätzlich ermöglicht die seitliche, separate Drehbegrenzung eine entsprechende Einstellung der Reibungskraft, um beispielsweise die Drehung um die senkrechte Drehachse weiter zu begrenzen oder den Grundkörper sogar relativ zum Haltesystem zu fixieren. Derart ist die Einstellung mit einer geringen Komplexität des Gelenks möglich; auch bleibt diese vorteilhafterweise vollständig unabhängig von einer Fixierung des Bügels um die laterale Drehachse und/oder von einer Anpassung der seitlichen Verdrehung einer Anschlussplatte am Bügel.

Eine voreingestellte Reibungskraft kann aufgrund der Federkraft und der Ausgangsposition des Gewindestifts bereitgestellt sein. Bevorzugt ist die Feder als Tellerfeder ausgebildet, um eine einfache Lagerung in der Aussparung und am Gewindestift zu ermöglichen. Besonders bevorzugt sind mehrere Federn nebeneinander angeordnet, sodass die einstellbare Reibungskraft entsprechend erhöht und/oder mit geringerem Aufwand eingestellt werden kann.

Das Gelenk gemäß der Erfindung ist insbesondere zur Befestigung einer Vorrichtung wie eines Monitors oder eines Medizingeräts vorgesehen. Um die Funktion der Vorrichtung weiter zu unterstützen, können zusätzliche Komponenten, wie Kabel oder Schläuche, erforderlich sein, welche relativ zur Vorrichtung gehalten werden müssen. Um eine entsprechende Halterung vorzusehen, ist das Gelenk entsprechend bevorzugt gekoppelt mit einem weiteren Bauteil.

Entsprechend kann vorgesehen sein, dass die Verbindungsschnittstelle an einer im montierten Zustand dem Haltesystem gegenüberliegenden Seite mindestens zwei voneinander in Umlaufsrichtung beabstandete Aufnahmen für eine Gelenkgruppe aufweist, wobei die Aufnahmen exzentrisch am ersten Endbereich angeordnet sind.

Die Aufnahmen sind folglich vorteilhaft nicht mittig angeordnet, sodass sie die Befestigung des Gelenks am Haltesystem nicht beeinträchtigen. Die Aufnahmen, welche insbesondere als Bohrungen ausgebildet sein können, sind bevorzugt am unteren Bereich des Grundkörpers angeordnet und können radial von einer Befestigungsschraube am ersten Endbereich des Grundkörpers beabstandet sein. Bevorzugt sind die Aufnahmen entsprechend an einem unteren Randbereich angeordnet.

Bevorzugt umfasst das Gelenk die Gelenkgruppe, welche mittels Schrauben an den Aufnahmen am ersten Endbereich des Grundkörpers befestigt ist, wobei eine Wand der Gelenkgruppe, welche an dem Grundkörper angrenzt, eine zentrale Aussparung aufweist, welche zum kontaktlosen Aufnehmen eines Endbereichs einer Schraube zur Befestigung des Gelenks am Haltesystem geeignet ist. Durch die vorteilhafte Anordnung der Aufnahmen am Grundkörper wird gewährleistet, dass die Gelenkgruppe beispielsweise um eine senkrechte Drehachse am ersten Endbereich des Grundkörpers mit dem Gelenk mitgedreht werden kann, ohne dass die Gelenkgruppe die Funktion und/ oder Drehung des Gelenks und einer daran befestigten Vorrichtung beeinträchtigt.

Bevorzugt ist die Aussparung entsprechend mittig angeordnet und dazu dimensioniert, einen Endbereich einer senkrechten Drehachse am ersten Endbereich des Grundkörpers aufzunehmen. Besonders bevorzugt sind mindestens drei Aufnahmen am Grundkörper vorgesehen, weiter bevorzugt vier, wobei die Aufnahmen in Umlaufrichtung weiter bevorzugt gleich voneinander beabstandet sind.

Die Gelenkgruppe kann beispielsweise rohrförmig ausgebildet sein und einen Kragen mit Aussparungen aufweisen, welche im montierten Zustand mit den Aufnahmen überlappen. Auf diese Weise können beispielsweise Schrauben in die Aufnahmen eingedreht werden. Um die Befestigung an den Aufnahmen zu erleichtern, kann die Gelenkgruppe in Umlaufrichtung entsprechende Öffnungen in Form von Langlöchern aufweisen, welche eine seitliche Einführung und Betätigung der Schrauben ermöglichen.

Die Gelenkgruppe kann beispielsweise eine oder mehrere Halterungen für Kabel, Schläuche und/oder Infusionsflaschen aufweisen, kann aber auch für eine Schnittstelle der Vorrichtung, wie eine beispielsweise eine Tastatur, eingerichtet sein.

### Kurze Beschreibung der Figuren

Bevorzugte weitere Ausführungsformen der Erfindung werden durch die nachfolgende Beschreibung der Figuren näher erläutert. Es zeigen:
Figur 1 eine Seitenansicht eines Haltesystems mit einem Gelenk gemäß der Erfindung;
Figur 2 eine Draufsicht des Gelenks gemäß der Erfindung in einem lateralen Schnitt;
Figur 3 eine perspektivische Seitenansicht eines Grundkörpers des Gelenks gemäß der Erfindung;
Figur 4 eine perspektivische Seitenansicht eines Bügels des Gelenks gemäß der Erfindung;
Figur 5 eine perspektivische Seitenansicht eines Federhalters des Gelenks gemäß der Erfindung;
Figur 6 eine Seitenansicht des Gelenks gemäß Figur 2 entlang eines Längsschnitts;
Figur 7 eine seitliche Detailansicht des ersten Endbereichs des Grundkörpers in einer bevorzugten Ausführungsform;
Figur 8 eine perspektivische Seitenansicht eines Lagerrings des Gelenks gemäß der Erfindung;
Figur 9 eine Vorderansicht des Lagerrings gemäß Figur 8;
Figur 10 eine Vorderansicht des Lagerrings gemäß Figur 8 mit einem weiteren Vorsprung;
Figur 11 eine Vorderansicht des Lagerrings gemäß Figur 8 mit einem alternativen Vorsprung;
   und eine perspektivische Seitenansicht eines ersten Gelenks für den Federarm gemäß der Erfindung;
Figur 12 eine Seitenansicht des Gelenks gemäß Figur 2 entlang eines Längsschnitts mit einem Lagerring gemäß Figur 8;
Figur 13 eine Seitenansicht des Gelenks gemäß Figur 12 in einer nach hinten gedrehten Position;
Figur 14 eine Seitenansicht des Gelenks gemäß Figur 12 in einer nach vorne gedrehten Position;
Figur 15 eine Vorderansicht einer Anschlussplatte in einer bevorzugten Ausführungsform des Bügels;
Figur 16 eine Vorderansicht der Anschlussplatte gemäß Figur 15 in einer geneigten Position;
Figur 17 eine Vorderansicht einer am Gelenk befestigten Vorrichtung bei einer geneigten Position der Anschlussplatte gemäß Figur 16;
Figur 18 eine perspektivische Seitenansicht des Federhalters gemäß Figur 5 mit einem alternativen Befestigungsabschnitt;
Figur 19 eine perspektivische Seitenansicht des Bügels gemäß Figur 4, welcher zur Befestigung mit dem Federhalter gemäß Figur 18 ausgebildet ist;
Figur 20 eine perspektivische Seitenansicht des Grundkörpers gemäß Figur 3 mit unteren Aufnahmen für eine Gelenkgruppe;
Figur 21 eine perspektivische Seitenansicht einer Gelenkgruppe zur Befestigung an den Aufnahmen des Grundkörpers gemäß Figur 20;
Figur 22 eine Draufsicht des Gelenks gemäß der Erfindung in einem lateralen Schnitt gemäß einer alternativen Ausführungsform; und
Figur 23 eine Draufsicht des Gelenks gemäß der Erfindung in einem lateralen Schnitt gemäß einer weiteren alternativen Ausführungsform.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen. Auf eine wiederholte Beschreibung dieser Elemente wird teilweise verzichtet, um Wiederholungen zu vermeiden.

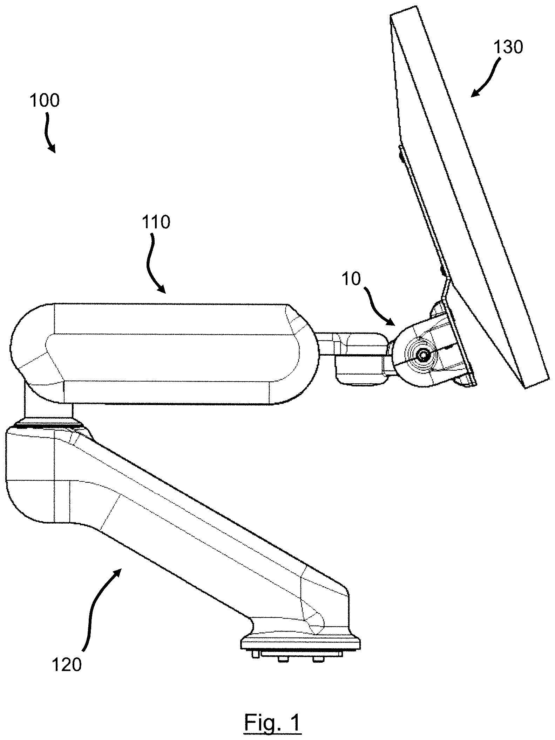

In Figur 1 ist ein bevorzugtes Haltesystem 100 mit einem Gelenk 10 gemäß der Erfindung in einer Seitenansicht dargestellt. Das Haltesystem 100 umfasst dabei einen höhenverstellbaren Federarm 110, welcher über einen Ausleger 120 drehbar gelagert ist. An der Vorderseite des Federarms 110 ist dabei das Gelenk 10 befestigt. Im vorliegenden Beispiel ist das Gelenk 10 an einem vorderen Gelenk des Federarms 110 befestigt und weist darüber hinaus eine Anschlussplatte auf, an die eine Vorrichtung 130 befestigt ist, im vorliegenden Beispiel ein Monitor.

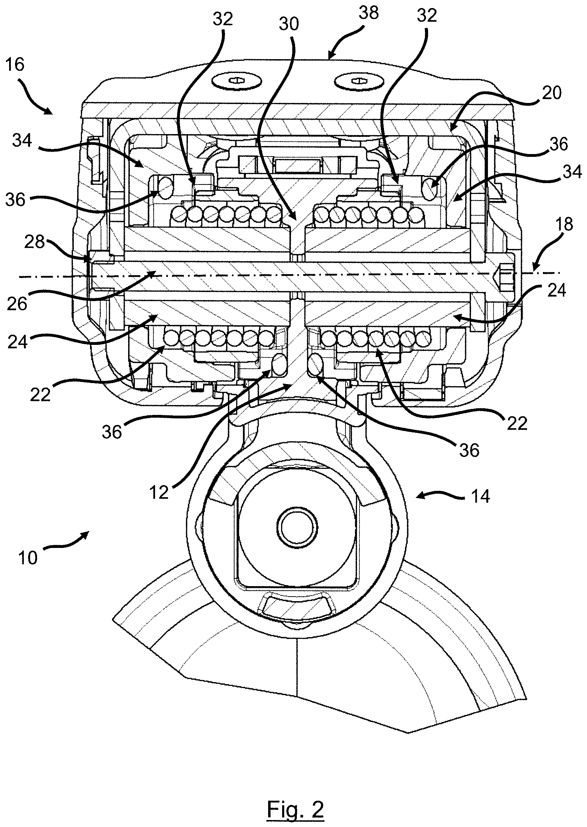

Das Gelenk 10 ist in weiterem Detail in Figur 2 in einer Draufsicht entlang eines lateralen Schnitts gezeigt. Das Gelenk 10 weist einen Grundkörper 12 auf, welcher sich in einer Längsrichtung, welche in der Figur von unten nach oben verläuft, sowie in einer lateralen Richtung, welche in der Figur von links nach rechts verläuft, erstreckt. Der Grundkörper 12 weist einen ersten längsseitigen Endbereich 14 sowie einen zweiten längsseitigen Endbereich 16 auf. Der erste Endbereich 14 ist zur Befestigung des Gelenks 10 beziehungsweise des Grundkörpers 12 am Haltesystem 100 konfiguriert. Der zweite Endbereich 16 ist für die Befestigung einer Vorrichtung 130 konfiguriert und insbesondere zur drehbaren Lagerung einer solchen Vorrichtung entlang einer lateralen Drehachse 18, wie mit der gestrichelten Linie gekennzeichnet.

Die Drehachse 18 erstreckt sich dabei durch einen Hohlraum des Grundkörpers 12. Um die Vorrichtung 130 mit dem Grundkörper 12 zu koppeln, ist ein Bügel 20 vorgesehen, welcher ein U-förmiges Profil aufweist und mit der Drehachse gekoppelt ist. Der Bügel 20 weist einen vorderen Befestigungsabschnitt auf, welcher für die Befestigung der Vorrichtung eingerichtet ist.

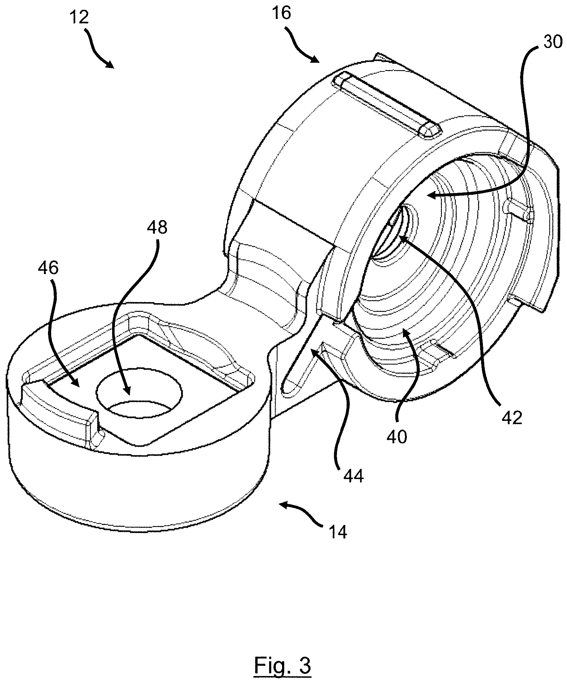

Um den Bügel 20 am Grundkörper 12 zu lagern, sind gemäß dieser bevorzugten Ausführungsform zwei Schenkelfedern 22 vorgesehen, welche im Hohlraum angeordnet sind. Die Schenkelfedern 22 sind in einer jeweiligen Aussparung des Grundkörpers aufgenommen, wobei die Aussparungen den Hohlraum bilden, wie dies detailliert in der Figur 3 gezeigt ist. Die Schenkelfedern 22 erstrecken sich in der lateralen Richtung entlang der Drehachse 18 und umgeben eine jeweilige Hülse 24, wodurch eine Schraube 26 geführt ist. Die Schraube 26 und die Hülsen 24 bilden dabei gemeinsam die laterale Drehachse 18. Die Schraube 26 ist durch den Endbereich des Bügels 20 hindurchgeführt und wird in einem Endbereich von einer Mutter 28, welche als Einpressmutter ausgebildet ist, gehalten, welche außerhalb des Bügels 20 angeordnet ist. Auf diese Weise bewirkt ein Anziehen der Schraube 26, dass die Hülsen 24 aufgrund der an den Endbereichen des Bügels 20 angelegten Schraubkraft zueinander gedrückt werden. Die Ausgestaltung der Mutter 28 als Einpressmutter verhindert dabei, dass die Mutter 28 sich beim Festschrauben der Schraube mitdreht.

Durch das Zusammendrücken kann der Bügel 20 auf vorteilhafte Weise am Grundkörper 12 befestigt werden. Denn im Hohlraum befindet sich eine mittig angeordnete Innenwand 30 des Grundkörpers 12, welche die Aussparungen voneinander trennt und durch welche lediglich eine Durchgangsöffnung vorgesehen ist, um die Schraube durch den gesamten Hohlraum zu führen. Beim Zusammendrücken der Bügelenden durch die Schraube und die Mutter werden die Hülsen 24 entsprechend an die Innenwand 30 gedrückt, sodass eine Reibungskraft entsteht. Dadurch wird ermöglicht, dass der Bügel 20 relativ zum Grundkörper 12 fixiert oder eine für eine Drehung des Bügels 20 erforderliche Kraft eingestellt werden kann.

Zusätzlich zur potenziellen Halterung des Bügels 20 relativ zum Grundkörper 12 sind weiterhin ein Lagerring 32 sowie ein Federhalter 34 für jede Schenkelfeder 22 vorgesehen, wobei der Lagerring 32 um die jeweilige Schenkelfeder 22 herum angeordnet ist und der Federhalter 34 um den jeweiligen Lagerring 32 gelagert ist. Der Lagerring ist dabei mittels Aussparungen, in welche Dome des Grundkörpers 12 eingreifen, am Grundkörper 12 befestigt. Die Federhalter 34 sind weiterhin jeweils mit dem Bügel 20 verbunden und weisen dazu einen entsprechenden vorderen Befestigungsabschnitt auf. Um den Bügel 20 über die Federhalter 34 und die Lagerringe 32 am Grundkörper 12 zu lagern, ist jede Schenkelfeder 22 über entsprechende Schenkel 36 formschlüssig sowohl mit dem Grundkörper 12 als auch mit dem jeweiligen Federhalter 34 verbunden.

Entsprechend wird eine Lagerung des Bügels 20 am Grundkörper 12 bereitgestellt, welche unabhängig von der Befestigung der Schraube 26 beziehungsweise einer eingestellten Reibkraft ist, wobei über die Schenkelfedern 22 eine vorgegebene Traglast einer Vorrichtung 130 aufgenommen werden kann. Um die Traglast auf den Bügel 20 und die Schenkelfedern 22 zu übertragen, ist am Bügel eine Anschlussplatte 38 vorgesehen, welche an die Vorrichtung 130 und die gewünschte Höhe angepasst sein kann.

In Figur 3 ist der Grundkörper 12 in weiterem Detail ohne Komponenten im Hohlraum gezeigt. Hier ist eine laterale Aussparung 40 gezeigt (die andere Aussparung 40 liegt entsprechend auf der gegenüberliegenden Seite), wobei eine Durchgangsöffnung 42 in der Innenwand 30 eine Verbindung zwischen den Aussparungen 40 bereitstellt und das Hindurchführen der Schraube 26 durch den Hohlraum ermöglicht. Angrenzend an der Innenwand 30 erstreckt sich eine Nut 44 in radialer Richtung, welche derart ausgerichtet ist, dass ein darin aufgenommener Schenkel 36 der Schenkelfeder 22 verdrehsicher und formschlüssig am Grundkörper 12 gehalten wird.

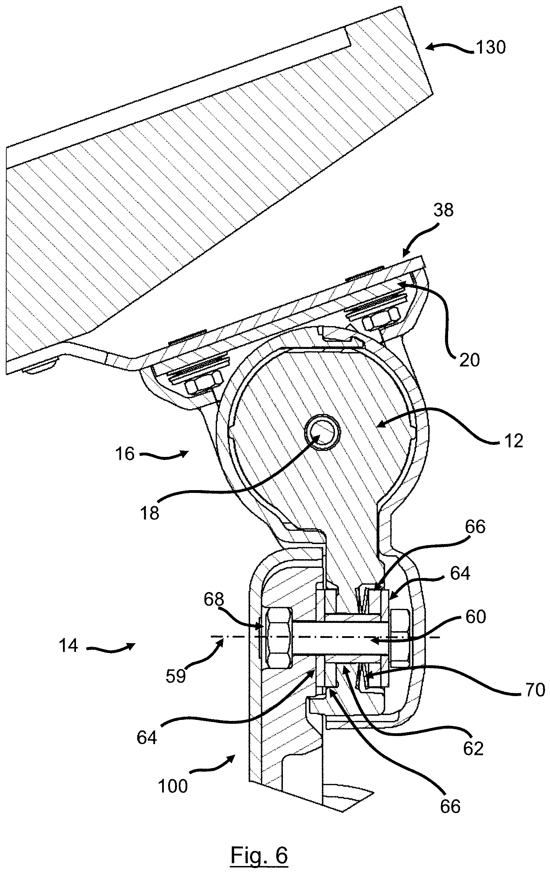

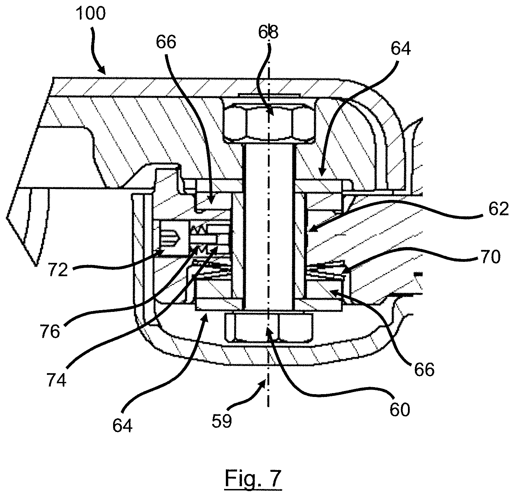

Am ersten Endbereich 14 des Grundkörpers 12 ist weiterhin eine Aufnahme 46 sowie eine Durchgangsöffnung 48 vorgesehen. Die Aufnahme 46 und die Durchgangsöffnung 48 sind für die drehbare Lagerung und Befestigung des Grundkörpers 12 am Haltesystem 100 ausgebildet, wie dies im Hinblick auf die Figuren 6 und 7 weiter beschrieben ist.

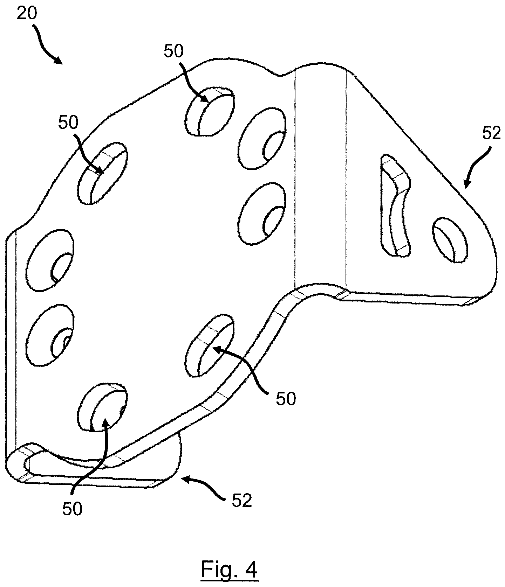

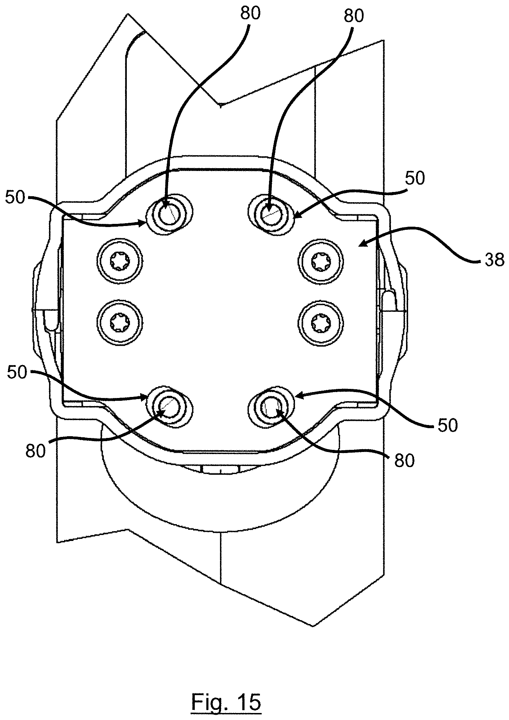

Ein beispielhafter Bügel 20 ist in Figur 4 gezeigt. Dabei weist der Bügel im vorliegenden Beispiel vier Langlöcher 50 auf, welche zur Aufnahme einer jeweiligen Schraube ausgebildet sind. Aufgrund der Langlöcher 50 kann eine Anschlussplatte 38 am Bügel 20 befestigt werden, wobei eine laterale Neigung der Anschlussplatte 38 und einer daran befestigten Vorrichtung 130 aufgrund der lateralen Erstreckung der Langlöcher 50 ermöglicht wird. Dies ist im Hinblick auf die Figuren 15 bis 17 weiter beschrieben.

Der U-förmige Bügel 20 weist weiterhin zwei Schenkel auf, welche sich parallel von der Stirnseite erstrecken und welche jeweils einen Endbereich 52 des Bügels 20 definieren. Die Endbereiche 52 weisen jeweils eine Aufnahme auf, durch welche die Schraube 26 hindurchgeführt werden kann.

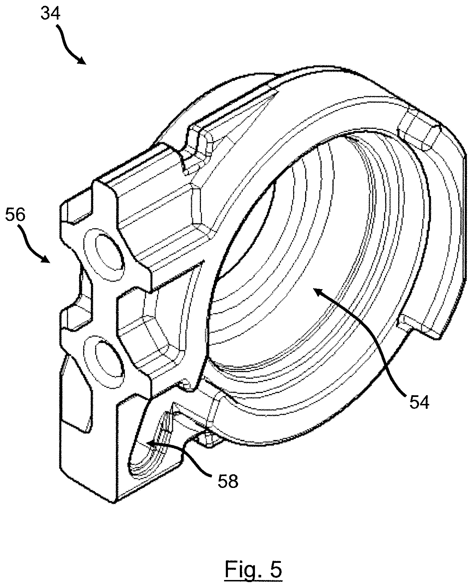

Eine bevorzugte Ausführungsform eines Federhalters 34 ist in Figur 5 in einer perspektivischen Seitenansicht gezeigt. Der Federhalter 34 weist einen ringförmigen Abschnitt auf, welcher einen Hohlraum 54 und eine daran angrenzende Nut 58 definiert. Der Hohlraum 54 ist besonders vorteilhaft, zumal der Federhalter 34 dadurch den Lagerring 32 sowie einen Abschnitt der durch den Lagerring 32 umgebenden Schenkelfeder 22 aufnehmen kann. Der Federhalter 34 kann somit auf den äußeren lateralen Endbereich des Lagerrings 32 und der Schenkelfeder 22 einfach aufgesteckt werden, wobei durch die Nut 58 eine Befestigung des Federhalters 34 an der Schenkelfeder 22 bereitgestellt wird. Auf diese Weise ist der Federhalter 34 entsprechend über die Schenkelfeder 22 und den Lagerring 32 am Grundkörper 12 gelagert.

An der Vorderseite des Federhalters 34 weist der Federhalter 34 einen Befestigungsabschnitt 56 auf. Im vorliegenden Beispiel weist der Befestigungsabschnitt 56 zwei übereinander angeordnete Aufnahmen in Form von Bohrungen zum Aufnehmen einer jeweiligen Schraube auf. Die Aufnahmen sind dabei derart dimensioniert und angeordnet, dass sie mit Aufnahmen im Bügel 20, welche nicht als Langloch 50 ausgebildet sind, überlappen. Ein Beispiel solcher Aufnahmen im Bügel ist in Figur 4 an den jeweiligen Seiten an der Stirnseite des Bügels 20 gezeigt.

Zusätzlich zur lateralen Drehachse 18 weist das Gelenk 10 bevorzugt ebenfalls eine senkrechte Drehachse 59 auf, wie dies in den Figuren 6 und 7 gezeigt ist. In Figur 6 ist das Gelenk 10 entsprechend an einem Haltesystem 100 befestigt, insbesondere an einem vorderen Gelenk des Haltesystems 100, wobei das vordere Gelenk am Federarm 110 gelagert ist. An der gegenüberliegenden Seite des Gelenks 10 ist weiterhin eine Vorrichtung 130 befestigt, welche mittels der Anschlussplatte 38 mit dem Bügel 20 verbunden ist.

Die senkrechte Drehachse 59 wird von einer Druckhülse 62 und einer darin geführten Schraube 60 definiert. Die Druckhülse 62 und die Schraube 60 sind in der Aufnahme 46 aufgenommen und durch die Durchgangsöffnung 48 geführt. An den Endbereichen der Druckhülse 62 sind Drehscheiben 64 angeordnet, welche entsprechend drehbar zum Grundkörper 12 angeordnet sind. Angrenzend an den Drehscheiben 64 ist weiterhin eine jeweilige verdrehsichere Scheibe 66 angeordnet, welche formschlüssig in der Aufnahme 46 des Grundkörpers 12 gehalten wird. Auf diese Weise wird ermöglicht, dass der Grundkörper 12 am Haltesystem 100 über die Drehscheiben 64 und die verdrehsicheren Scheiben 66 gelagert wird, wobei die Drehscheiben 64 und die verdrehsicheren Scheiben 66 entsprechend gleitende Kontaktflächen zueinander definieren.

In der Aufnahme 46 ist an einer Seite weiterhin eine Feder 70 aufgenommen, welche bevorzugt als Tellerfeder ausgebildet ist. Die Feder 70 bewirkt, dass eine Vorspannkraft auf die angrenzende verdrehsichere Scheibe 66 ausgeübt wird und die verdrehsichere Scheibe 66 entsprechend an die angrenzende Drehscheibe 64 gedrückt wird, sodass eine vorgegebene Reibungskraft bereitgestellt wird. Diese Reibungskraft ermöglicht, dass eine Schwenkbewegung des Gelenks 10 am Haltesystem 100 nur mit einer vorgegebenen (jedoch geringen) Kraft vorgesehen ist. Beim Anziehen der Schraube 60 mit einer Mutter 68 kann die Reibungskraft entsprechend von einer Anziehkraft entkoppelt sein.

Um eine Bewegung des Gelenks 10 um die senkrechte Drehachse 59 zu begrenzen oder die dazu erforderliche Kraft vorzugeben, weist das Gelenk 10 am ersten Endbereich 14 bevorzugt ein einstellbares Bremselement auf, wie in Figur 7 gezeigt. Entsprechend kann der Grundkörper 12 zur Druckhülse 62 eine radiale Aussparung aufweisen, in die ein Gewindestift 72 aufgenommen ist. Am Gewindestift 72 ist eine Bremsbacke 74 angeordnet, welche in radialer Richtung verschiebbar ist und von einer oder mehreren Federn 76 radial vorgespannt wird. Beim Drehen des Gewindestifts 72 wird die Feder 76 entsprechend näher zur Bremsbacke 74 positioniert, wodurch die Vorspannkraft und die damit einhergehende Reibungskraft zwischen der Bremsbacke 74 und der Druckhülse 62 erhöht werden. Entsprechend kann anhand der Position des Gewindestifts eine gewünschte Reibungskraft eingestellt werden, welche vollständig unabhängig von der Lagerung der Vorrichtung am zweiten Endbereich 16 ist.

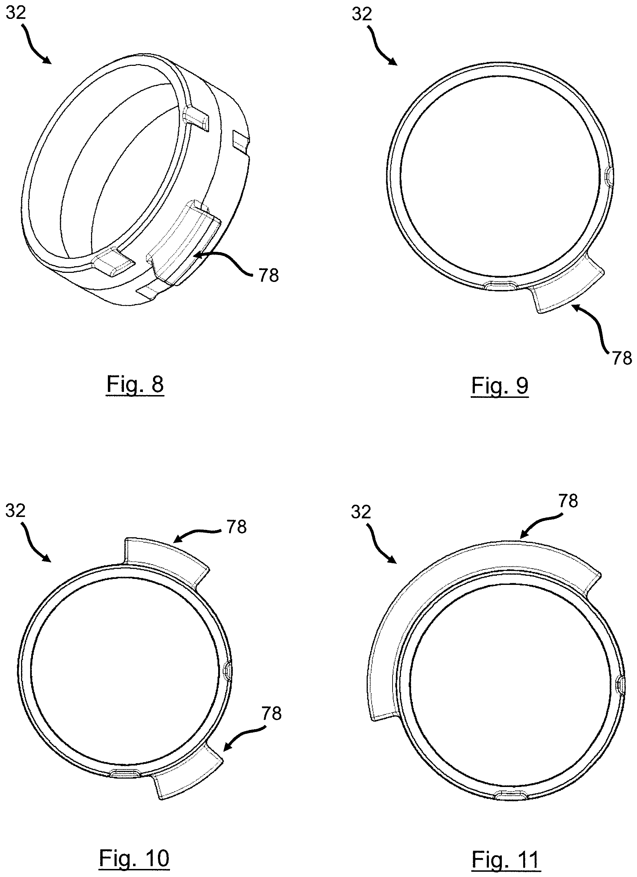

In den Figuren 8 bis 11 sind verschiedene Ausführungsformen eines Lagerrings 32 dargestellt. Dabei sind neben dem mindestens einen Vorsprung 78 ebenfalls Aussparungen oder Ausschnitte am Umfang des Lagerrings 32 vorgesehen, welche im eingesetzten Zustand im Hohlraum des Grundkörpers 12 mit Domen des Grundkörpers 12 im Eingriff stehen. Durch die vorgegebene Anordnung der Aussparungen kann gewährleistet werden, dass der Lagerring 32 in einer vorgegebenen Ausrichtung innerhalb des Hohlraums aufgenommen ist, sodass der mindestens eine Vorsprung 78 eine gewünschte Drehwinkelbegrenzung ermöglicht.

In den Figuren 8 und 9 ist der Vorsprung 78 entsprechend derart angeordnet und dimensioniert, dass der Bügel 20 und die damit verbundene Vorrichtung 130 etwa -60° nach hinten und etwa 85° nach vorne gedreht werden kann. In der Ausführungsform gemäß Figur 10 liegt dieser Drehwinkelbereich zwischen -60° nach hinten und 45° nach vorne, während der Drehwinkelbereich gemäß Figur 11 zwischen -60° bis -90° nach hinten liegt.

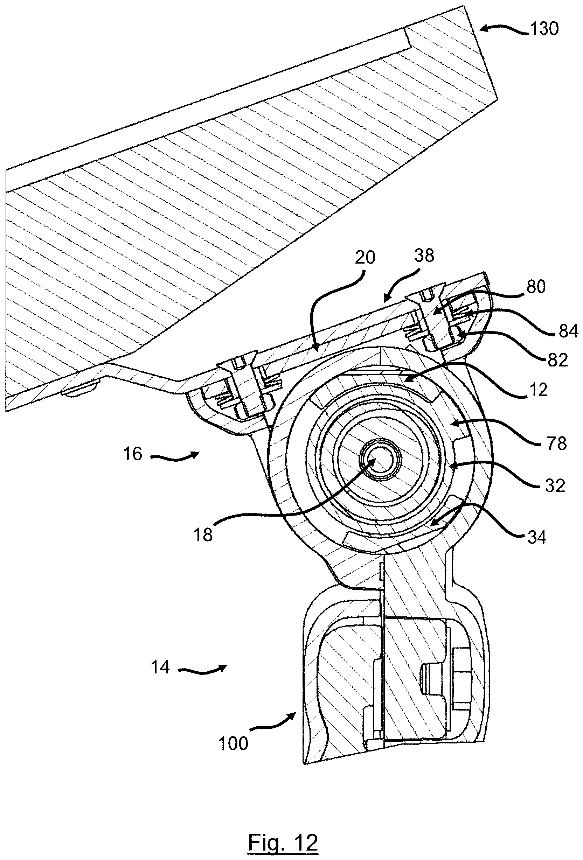

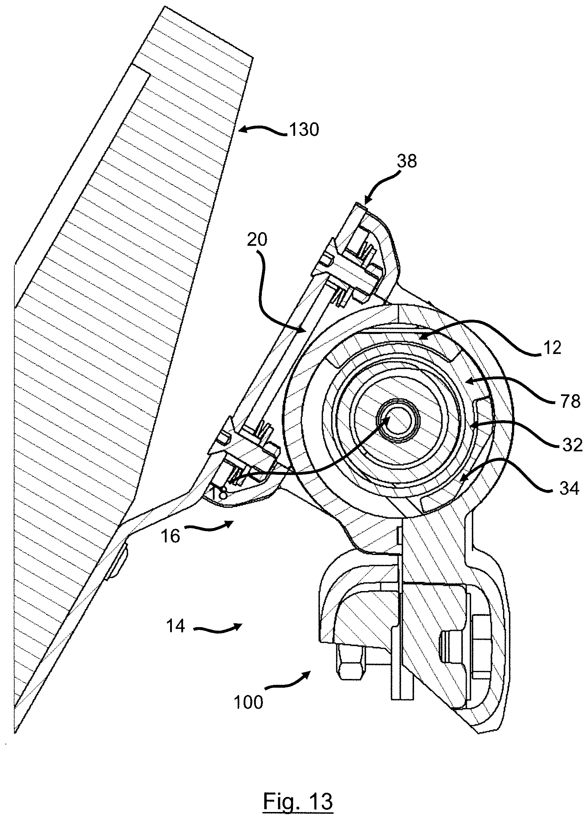

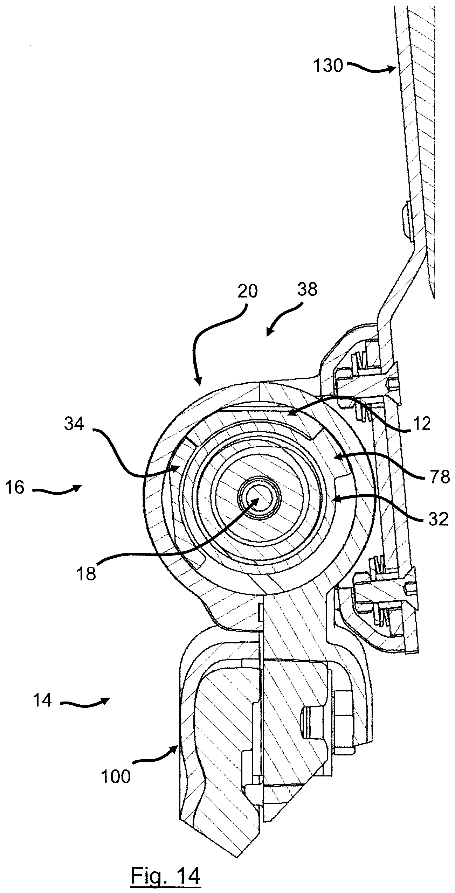

Ein entsprechendes Beispiel ist in den Figuren 12 bis 14 gezeigt, wobei der Lagerring 32 dem Lagerring 32 gemäß den Figuren 8 und 9 entspricht. Entsprechend sind die Vorrichtung 130 und der Bügel 20 gemäß Figur 12 etwa um die senkrechte Erstreckungsrichtung geneigt, wobei ein Vorsprung des Federhalters 34 nicht mit dem Vorsprung 78 im Eingriff steht. Beim Verdrehen der Vorrichtung 130 nach hinten stößt der Vorsprung des Federhalters 34 jedoch an den Vorsprung 78, sodass eine Drehung über -60° nicht möglich ist. Beim Verdrehen der Vorrichtung 130 nach vorne stößt der Vorsprung des Federhalters 34 nicht an den Vorsprung 78. Im vorliegenden Beispiel ist eine weitere Drehung über etwa 85° hinaus aufgrund der Geometrien und Dimensionierungen des Gelenks 10 nicht möglich.

In Figur 12 ist weiterhin in Detail dargestellt, wie die Anschlussplatte 38 bevorzugt mit dem Bügel 20 verbunden werden kann. So können in Aufnahmen an der Anschlussplatte 38 und im Bügel 20 Schrauben 80 eingesetzt sein, welche am Bügel 20 innenseitig von jeweiligen Druckhülsen 82 aufgenommen sind. Auf diese Weise wird eine Halterung der Anschlussplatte 38 am Bügel 20 im Wesentlichen ohne eine Klemmkraft ermöglicht. Zur verbesserten Halterung sind jedoch Federn 84 vorgesehen, welche bevorzugt als Tellerfedern ausgebildet sind und an der jeweiligen Druckhülse 82 aufgenommen sind. Durch die Federn 84 wird der Bügel 20 mit einer vorgegebenen Andruckkraft an die Anschlussplatte 38 gedrückt. Hierdurch entsteht ein vorgegebenes Spiel, wodurch die Anschlussplatte 38 relativ zum Bügel 20 leicht geneigt werden kann.

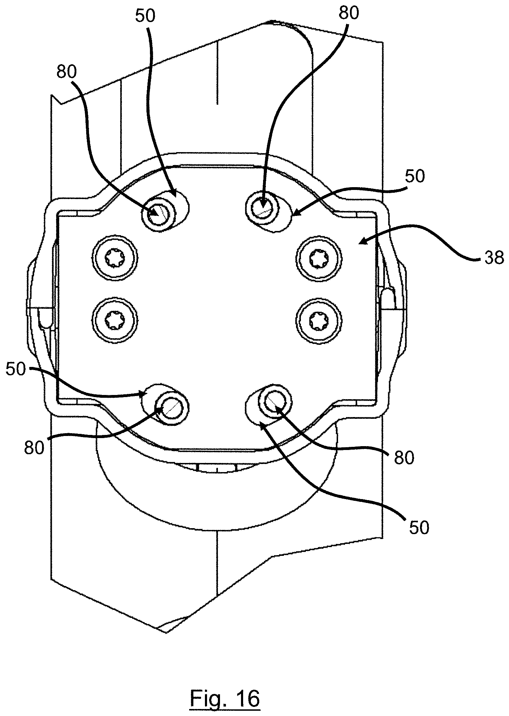

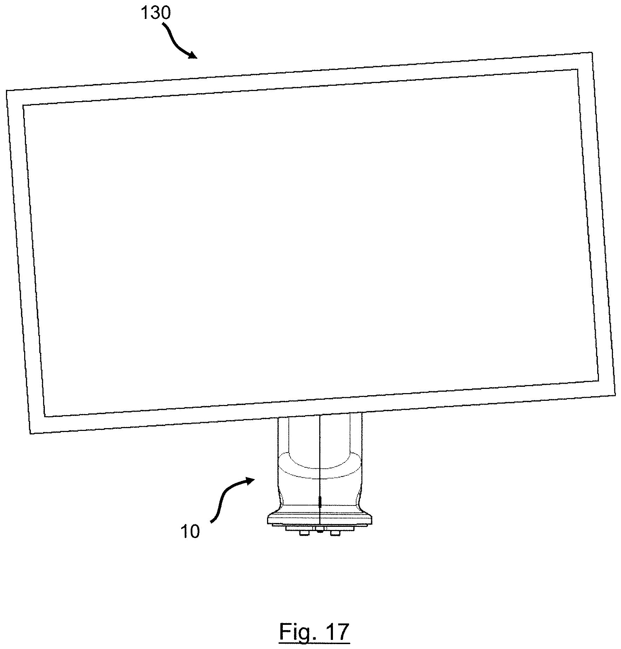

In den Figuren 15 bis 17 ist eine Anschlussplatte 38 dargestellt, welche mit einer bevorzugten Ausführungsform des Bügels 20 gemäß Figur 4 verbunden ist. Aus diesen Figuren wird ersichtlich, dass das Gelenk 10 zusätzlich zur lateralen Drehachse 18 und bevorzugt zusätzlich zur senkrechten Drehachse 59 weiterhin eine seitliche Neigungsanpassung ermöglicht. Diese Neigungsanpassung wird, wie vorstehend beschrieben, bevorzugt bereits durch die Verwendung von Druckhülsen 82 und Federn 84 realisiert. Die vorgesehenen Langlöcher 50 ermöglichen darüber hinaus eine weitere laterale oder seitliche Neigungsanpassung. So ist die Anschlussplatte 38 gemäß Figur 16 seitlich relativ zum Bügel 20 gedreht. Diese geringfügige Neigungsanpassung kann jedoch bereits in einer wahrnehmbaren seitlichen Neigung der typischerweise größer dimensionierten Vorrichtung 130 resultieren, wie in Figur 17 gezeigt.

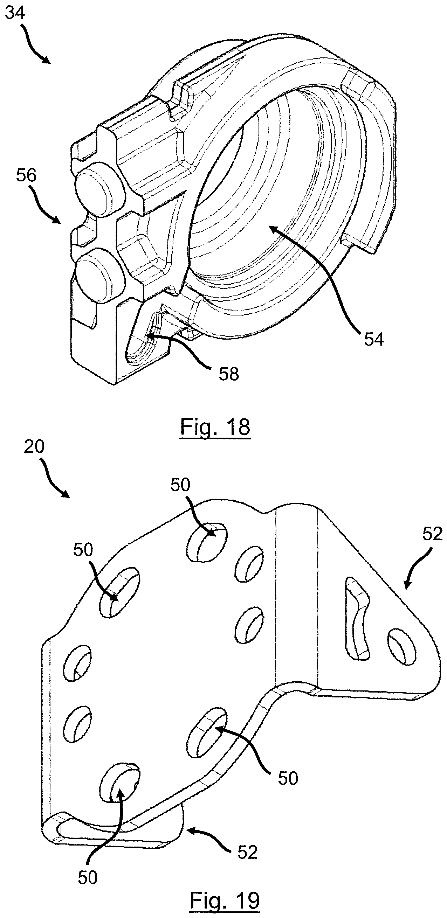

Eine alternative Ausführungsform eines Federhalters 34 ist in Figur 18 gezeigt. Der Aufbau des Federhalters 34 entspricht im Wesentlichen dem Aufbau des Federhalters 34 gemäß Figur 5, weist jedoch einen alternativen Befestigungsabschnitt 56 auf. Gemäß dieser Ausführungsform sind keine Aufnahmen für jeweilige Schrauben vorgesehen; vielmehr weist der Befestigungsabschnitt entsprechende Zapfen auf, welche in die Aufnahmen des Bügels 20 eingesteckt werden können. Eine entsprechende Ausgestaltung des Bügels 20 ist in Figur 19 in der perspektivischen Seitenansicht dargestellt.

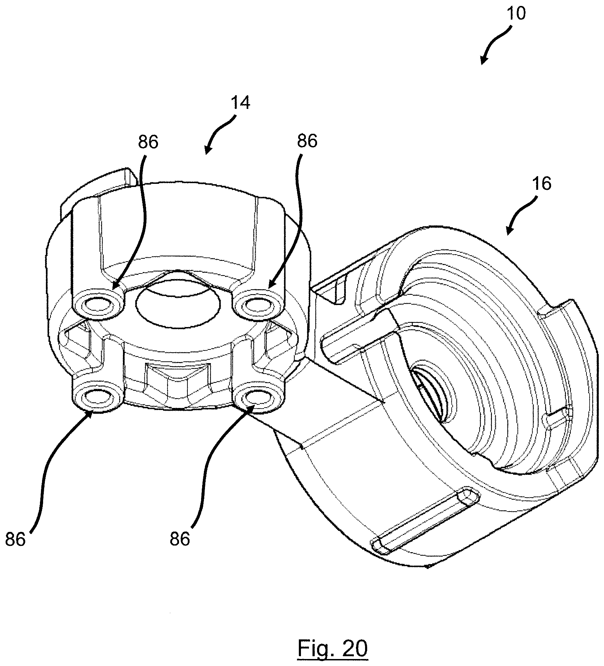

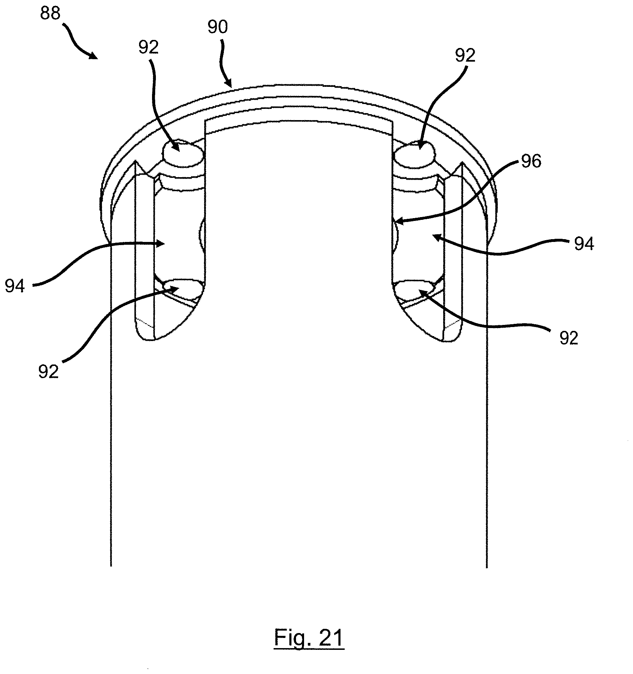

In den Figuren 20 und 21 ist der Grundkörper 12 des Gelenks 10 in einer bevorzugten Ausführungsform zur Verbindung mit einer Gelenkgruppe 88 gezeigt. Zur Verbindung der Gelenkgruppe 88 weist der Grundkörper 12 an dessen Unterseite am ersten Endbereich 14 vier Aufnahmen 86 auf, welche als Bohrungen zum Aufnehmen einer jeweiligen Schraube ausgebildet sind. Die Aufnahmen 86 sind dabei exzentrisch und am Randbereich angeordnet. Auf diese Weise werden die Aufnahme 46 und die Durchgangsöffnung 48 für die senkrechte Drehachse 59 nicht von den Aufnahmen 86 beeinträchtigt. Die Aufnahmen 86 sind weiterhin gleichmäßig in Umlaufrichtung voneinander beabstandet, wodurch eine verbesserte mechanische Befestigung der Gelenkgruppe 88 ermöglicht wird.

Die Gelenkgruppe 88 selbst weist an einem dem Grundkörper 12 angrenzenden Kragen 90 entsprechende Aufnahmen 92 für jeweilige Schrauben auf. Um eine Schraubverbindung zu erleichtern, sind am Umfang der Gelenkgruppe 88 Langlöcher auf Höhe der Aufnahmen 92 vorgesehen, welche einen jeweiligen inneren Hohlraum definieren. Auf diese Weise können Schrauben einfach in die entsprechende Aufnahmen 92 eingeführt und über das jeweilige Langloch 94 befestigt werden. Weiterhin ist in der Figur 21 zusätzlich der Randbereich der Aussparung 96 gezeigt, welcher mittig angeordnet und dazu ausgebildet ist, einen Endbereich der Schraube 60 für die senkrechte Drehachse 59 kontaktlos aufzunehmen. Entsprechend ist der Endbereich der Gelenkgruppe 88 derart ausgebildet, dass die für die senkrechte Drehachse 59 vorgesehenen Bauteile auch bei einer Schwenkbewegung des Gelenks 10 um die senkrechte Drehachse 59 nicht mit der Gelenkgruppe 88 im Eingriff stehen.

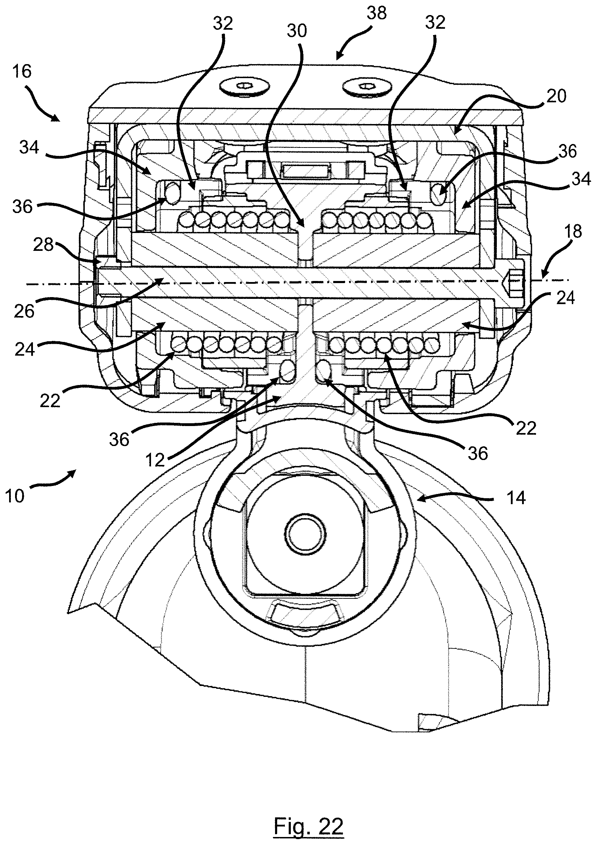

In Figur 22 ist das erfindungsgemäße Gelenk 10 in einer Draufsicht in einem lateralen Schnitt gezeigt. Diese alternative Ausführungsform des Gelenks 10 ist dabei ähnlich wie die in der Figur 2 dargestellten Ausführungsform aufgebaut, unterscheidet sich aber darin, dass die Federhalter 34 nicht mit dem Bügel 20 fest verbunden beziehungsweise verschraubt sind, sondern über Zapfen des jeweiligen Federhalters 34 und einer Spielpassung in Aufnahmen des Bügels 20 eingesteckt ist. Um dabei eine hinreichende Lagerung des Bügels 20 zu gewährleisten, ist der Bügel 20 über die Hülsen 24 und die Schraube 26 gelagert. Entsprechend sind die Hülsen 24 im Vergleich zu den Hülsen 24 in der Ausführungsform gemäß Figur 2 unterschiedlich dimensioniert und reibschlüssig oder gleitend mit der äußeren Oberfläche der Schraube 26 verbunden, sodass kein oder nur ein geringfügiger Spalt vorhanden ist. Anstatt einer einzelnen Hülse 24 in der jeweiligen Aussparung, kann ebenfalls vorgesehen sein, dass die Hülse 24 zweiteilig oder mehrteilig ausgebildet ist und eine äußere Hülse und mindestens eine darin angeordnete innere Hülse aufweist, wobei die äußere Hülse und die innere Hülse bevorzugt aus unterschiedlichen Materialien ausgebildet sind.

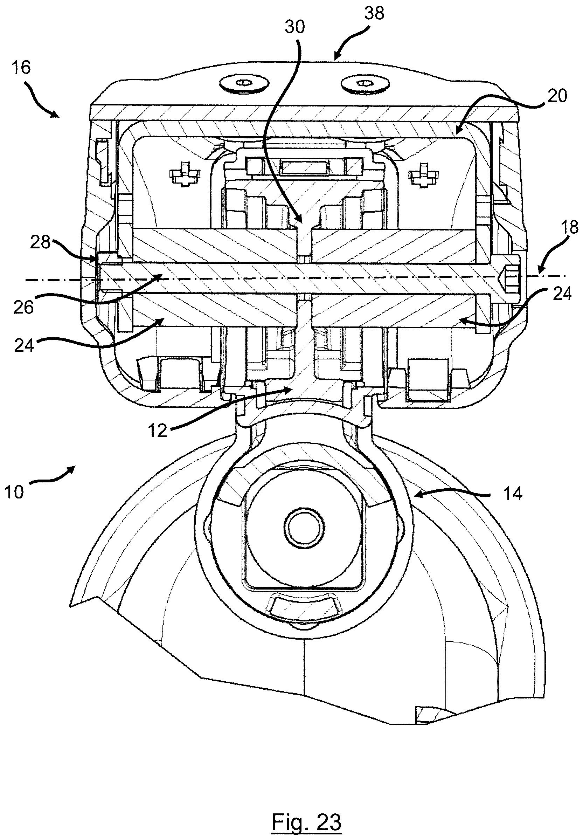

In der Ausführungsform gemäß Figur 23 ist der Bügel 20 ebenfalls über die Hülsen 24 und die Schraube 26 gelagert. Im vorliegenden Beispiel wird der Bügel 20 ausschließlich über die Lagerung um die Drehachse begrenzt beziehungsweise fixiert und es sind keine Federhalter und Lagerringe und Schenkelfedern vorgesehen. Durch eine Anziehkraft der Schraube und die Ausgestaltung der Hülsen 24 kann eine Reibkraft bereitgestellt werden, welche für die sichere Halterung einer Vorrichtung ausreichend ist und gegebenenfalls noch eine manuelle Anpassung der Neigung ermöglicht.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 10: Gelenk
- 12: Grundkörper
- 14: erster Endbereich
- 16: zweiter Endbereich
- 18: laterale Drehachse
- 20: Bügel
- 22: Schenkelfeder
- 24: Hülse
- 26: Schraube
- 28: Mutter
- 30: Innenwand
- 32: Lagerring
- 34: Federhalter
- 36: Schenkel
- 38: Anschlussplatte
- 40: Aussparung
- 42: Durchgangsöffnung
- 44: Nut
- 46: Aufnahme
- 48: Durchgangsöffnung
- 50: Langloch
- 52: Endbereich
- 54: Aussparung
- 56: Befestigungsabschnitt
- 58: Nut
- 59: senkrechte Drehachse
- 60: Schraube
- 62: Druckhülse
- 64: Drehscheibe
- 66: Schreibe
- 68: Mutter
- 70: Feder
- 72: Gewindestift
- 74: Bremsbacke
- 76: Feder
- 78: Vorsprung
- 80: Schraube
- 82: Druckhülse
- 84: Feder
- 86: Aufnahme
- 88: Gelenkgruppe
- 90: Kragen
- 92: Aufnahme
- 94: Langloch
- 96: Aussparung

## Patentansprüche

1. Gelenk (10) für ein Haltesystem (100), bevorzugt für einen Federarm (110), umfassend
- einen Grundkörper (12), welcher an einem ersten längsseitigen Endbereich (14) eine Verbindungsschnittstelle zur Befestigung des Gelenks (10) am Haltesystem (100) aufweist und an einem zweiten gegenüberliegendem längsseitigen Endbereich (16) einen Hohlraum aufweist, welcher sich lateral zur Längsrichtung erstreckt,
- eine laterale Drehachse (18), welche den Hohlraum durchstreckt, und
- einen Bügel (20) zum Aufnehmen einer Vorrichtung (130), welcher mittels mindestens einer im Hohlraum angeordneten Schenkelfeder (22) um die laterale Drehachse (18) gelagert ist,
wobei die laterale Drehachse (18) durch mindestens eine Hülse (24) und eine dadurch geführte Schraube (26) gebildet ist und wobei sich gegenüberliegende Endbereiche (52) des Bügels (20) durch die mindestens eine Hülse (24) und die Schraube (26) an einer den Hohlraum definierenden Innenfläche des Grundkörpers (12) fixierbar sind.

2. Gelenk (10) gemäß Anspruch 1, wobei der Hohlraum durch zwei sich lateral erstreckende Aussparungen (40) gebildet ist, welche sich gegenüberliegen und parallel zueinander angeordnet sind, wobei die Aussparungen (40) mittels einer Durchgangsöffnung (42), durch welche die Schraube (26) geführt ist, miteinander verbunden sind.

3. Gelenk (10) gemäß Anspruch 2, wobei die Durchgangsöffnung (42) in einer mittig angeordneten Innenwand (30) des Grundkörpers (12) vorgesehen ist, wobei für jede Aussparung (40) mindestens eine Hülse (24) vorgesehen ist und wobei der Bügel (20) über die Hülsen (24) mit der Innenwand (30) im Eingriff steht.

4. Gelenk (10) gemäß Anspruch 2 oder 3, wobei für jede Schenkelfeder (22) ein jeweiliger Federhalter (34) zumindest teilweise im Hohlraum angeordnet ist, welcher mit dem Bügel (20) verbunden ist, wobei die Schenkelfeder (22) und der Federhalter (34) sich lateral erstrecken und wobei jede Schenkelfeder (22) am jeweiligen Federhalter (34) befestigt ist.

5. Gelenk (10) gemäß Anspruch 4, wobei ein Schenkel (36) einer jeden Schenkelfeder (22) in einer Nut (58) des jeweiligen Federhalters (34) aufgenommen ist und wobei der jeweils andere Schenkel (36) der jeweiligen Schenkelfeder (22) in einer Nut (44) des Grundkörpers (12) aufgenommen ist.

6. Gelenk (10) gemäß Anspruch 4 oder 5, wobei für jede Schenkelfeder (22) ein Lagerring (32) im Hohlraum vorgesehen ist, welcher um die jeweilige Schenkelfeder (22) herum angeordnet ist und verdrehsicher an der Innenfläche des Grundkörpers (12) gehalten ist und wobei jeder Lagerring (32) von einem jeweiligen Federhalter (34) umgeben ist.

7. Gelenk (10) gemäß Anspruch 6, wobei jeder Lagerring (22) mindestens einen sich radial nach außen erstreckenden Vorsprung (78) aufweist, welcher mit einem Vorsprung am jeweiligen Federhalter (34) in Eingriff bringbar ist und einen Drehwinkel des Bügels (20) um die laterale Drehachse (18) begrenzt.

8. Gelenk (10) gemäß Anspruch 7, wobei der Drehwinkel in entgegengesetzten Richtungen durch zwei in Umfangsrichtung voneinander beabstandete Vorsprünge (78) oder durch einen sich entlang der Umfangsrichtung erstreckenden Vorsprung (78) unterschiedlich begrenzt ist.

9. Gelenk (10) gemäß einem der vorstehenden Ansprüche, umfassend eine Anschlussplatte (38), welche an einer äußeren Oberfläche des Bügels (20) befestigt ist, wobei die Anschlussplatte (38) und der Bügel (20) mindestens zwei Aufnahmen aufweisen, welche überlappend zueinander angeordnet sind und worin jeweils eine Schraube (80) aufgenommen ist, wobei die Schrauben (80) an einer inneren Oberfläche des Bügels (20) in einer jeweiligen Druckhülse (82) aufgenommen sind und der Bügel (20) ausschließlich durch an den Druckhülsen (82) befestigte Federn (84) zur Anschlussplatte (38) vorgespannt ist.

10. Gelenk (10) gemäß Anspruch 9, wobei die Aufnahmen des Bügels (20) als Langlöcher (50) ausgebildet sind, welche sich zumindest teilweise lateral erstrecken.

11. Gelenk (10) gemäß einem der vorstehenden Ansprüche, wobei die Verbindungsschnittstelle am ersten Endbereich (14) des Grundkörpers (12) eine senkrechte Drehachse (59) definiert, welche sich senkrecht zur Längsrichtung und zur lateralen Erstreckungsrichtung des Grundkörpers (12) erstreckt, und wobei der Grundkörper (12) dazu eingerichtet ist, im montierten Zustand um die senkrechte Drehachse (59) am Haltesystem (100) gelagert zu sein.

12. Gelenk (10) gemäß Anspruch 11, wobei die senkrechte Drehachse (59) von einer in einer Aufnahme (46) des Grundkörpers (12) vorgesehenen Durchgangsöffnung mit einer darin aufgenommenen Druckhülse (62) für eine Schraube (60) gebildet ist, wobei an den Stirnseiten der Druckhülse (62) eine jeweilige Drehscheibe (64) um die Druckhülse (62) angeordnet ist, und wobei an mindestens einem längsseitigen Endbereich der Druckhülse (62) eine Scheibe (66) in der Aufnahme (46) angeordnet ist, welche verdrehsicher zum Grundkörper (12) gehalten ist und durch eine in der Aufnahme (46) angeordnete Feder (70) an eine angrenzende Drehscheibe (64) gedrückt wird.

13. Gelenk (10) gemäß Anspruch 12, wobei der Grundkörper (12) radial zur Druckhülse (62) eine Aussparung aufweist, in welcher ein Gewindestift (72) mit einer darauf in radialer Richtung verschiebbar angeordneten Bremsbacke (74) angeordnet ist, wobei die Bremsbacke (74) durch mindestens eine Feder (76), welche zwischen der Bremsbacke (74) und einer Aufnahme am Gewindestift (72) angeordnet ist, mit dem Umfang der Druckhülse (62) im Eingriff steht.

14. Gelenk (10) gemäß einem der vorstehenden Ansprüche, wobei die Verbindungsschnittstelle an einer im montierten Zustand dem Haltesystem (100) gegenüberliegenden Seite mindestens zwei voneinander in Umlaufsrichtung beabstandete Aufnahmen (86) für eine Gelenkgruppe (88) aufweist, wobei die Aufnahmen (86) exzentrisch am ersten Endbereich (14) angeordnet sind.

15. Gelenk (10) gemäß Anspruch 14, umfassend die Gelenkgruppe (88), welche mittels Schrauben an den Aufnahmen (86) am ersten Endbereich (14) des Grundkörpers (12) befestigt ist, wobei eine Wand der Gelenkgruppe (88), welche an dem Grundkörper (12) angrenzt, eine zentrale Aussparung (96) aufweist, welche zum kontaktlosen Aufnehmen eines Endbereichs einer Schraube (60) zur Befestigung des Gelenks (10) am Haltesystem (100) geeignet ist.

16. Haltesystem umfassend einen Federarm (110), wobei der Federarm (110) ein Gelenk (10) nach einem der vorhergehenden Ansprüche 1 bis 15 umfasst, wobei das Gelenk (10) bevorzugt an einem vorderen Gelenk des Haltesystems befestigt ist.
